# EUROPÄISCHE PATENTSCHRIFT

(11) **EP 0 665 240 B1**
(45) Veröffentlichungstag und Bekanntmachung des Hinweises auf die Patenterteilung: **01.04.1998**
(21) Anmeldenummer: 95100491.0
(22) Anmeldetag: 14.01.1995
(51) Int. Cl.: C08F 8/00, C08F 8/14, C08F 8/34, C08F 8/44

(54) **Polymethacrylat-Polymethacrylsäure-Blockcopolymere**
Poly(methacrylate)-Poly(methacrylic acid)-Blockcopolymers
Copolymères blocs poly(méthacrylate)-poly(acide méthacrylique)

(30) Priorität: 28.01.1994 DE 4402484
(43) Veröffentlichungstag der Anmeldung: 02.08.1995
(73) Patentinhaber: Th. Goldschmidt AG, 45127 Essen (DE)
(72) Erfinder: Fock, Jürgen, Dr., D-40470 Düsseldorf (DE); Knebelkamp, Arno, Dr., D-45131 Essen (DE)

(56) Entgegenhaltungen:
- EP-A- 0 553 655
- US-A- 3 893 984

## Beschreibung

Die Erfindung betrifft Polymethacrylat-Polymethacrylsäure-Blockcopolymere und deren Alkali- oder Ammoniumsalze. Die Erfindung betrifft ferner die Herstellung dieser Blockcopolymeren und deren Verwendung als Polymertenside, insbesondere als Dispergier- und Emulgiermittel, sowie als Mittel zur Oberflächenmodifizierung von Kunststoffen und ihre Verwendung als Antistatika.

Die Erfindung betrifft ferner Polymethacrylat-Poly-tert.-butylmethacrylat-Blockcopolymere als Zwischenprodukte zur Herstellung der erfindungsgemäßen Polymeren des Patentanspruchs 1.

Die DE-OS 21 23 766 betrifft Copolymerisate mit einer hydrophilen Oberfläche aus 75 bis 92 % Methylmethacrylat und 8 bis 25 % Acrylsäure. Die Polymerisation erfolgt radikalisch in Substanz, so daß Polymerisate mit einer statistischen Verteilung der Monomer-Einheiten erhalten werden. Die Copolymerisate werden zwar als Blockcopolymerisate bezeichnet, jedoch wird hierunter die Copolymerisation der Monomerenmischung in Substanz und keine blockweise Anordnung der Monomer-Einheiten verstanden. Die Copolymerisate werden insbesondere zur Herstellung von Kontaktlinsen empfohlen, da die Oberflächen der geformten Copolymerisate durch Umsetzung mit Basen oberflächlich hydrophiliert werden können.

Polymethylmethacrylat-Poly-tert.-butyl(meth)acrylat-Blockcopolymere und ihre Herstellung durch anionische Polymerisation sind in Macromolecules 1991, 24, 4997 - 5000 beschrieben. Diese Verfahrensweise ist aber technisch kaum durchführbar, da die anionische Polymerisation sehr reine, wasserfreie Lösungsmittel (insbesondere Tetrahydrofuran) und Reaktanden erfordert. Die Reaktion muß bei tiefen Temperaturen von -78°C vorgenommen werden. Überdies ist der Einsatz von Alkalimetallinitiatoren notwendig.

Die EP-OS 0 518 225 beschreibt wäßrige pigmentierte Tinten für Tintenstrahldrucker. Diese enthalten als Stabilisator ein AB- oder ABA-Blockcopolymer, wobei beispielsweise das Segment A durch Polymerisation von n-Butylmethacrylat und das Segment B zunächst durch Polymerisation von Trimethylsilylmethacrylat hergestellt wird. Aus dem letzteren läßt sich durch hydrolytische Abspaltung des Trimethylsilylrestes ein Polymethacrylsäuresegment darstellen. Als Polymerisationsverfahren wird das Verfahren der Group Transfer Polymerisation (GTP-Verfahren) angewendet, wie es z.B. in der US-PS 4 508 880 beschrieben ist.

Eine ausführliche Beschreibung dieser GTP findet sich in Eur. Polym. J. Vol. 29, No. 2/3, 407 - 414 (1993). Die Polymerisation wird typischerweise durch ein O-Silylketenacetat initiiert; gebräuchlich ist 1-Methoxy-1-(trimethylsiloxy)-2-methylpropen. Als Katalysator wird eine nucleophile Verbindung, wie Tris(dimethylamino)sulfonium-bifluorid verwendet. Das GTP-Verfahren verläuft nach folgendem Schema:

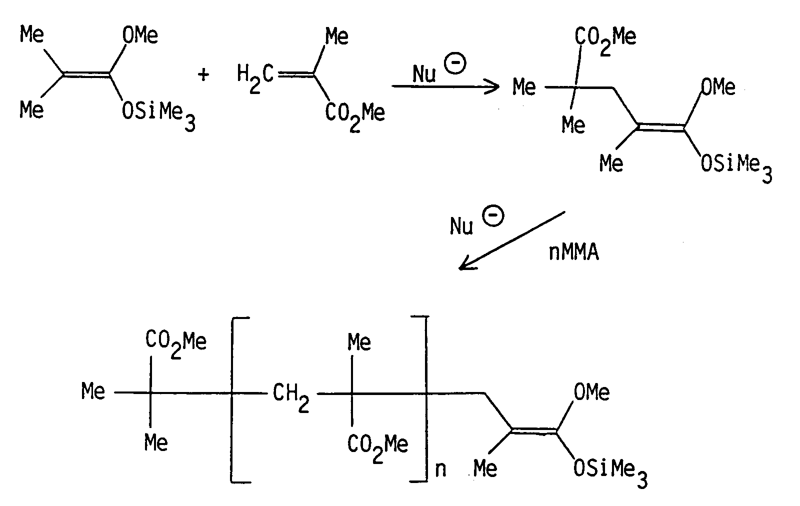

Ähnlich der anionischen Polymerisation ist es auch bei diesem Verfahren unerläßlich, die verwendeten Reaktionspartner sehr sorgfältig zu trocknen und von Alkoholresten zu befreien. Dabei müssen auch bei der Reaktion Spuren von Feuchtigkeit ferngehalten werden. Überdies sind die als Initiator und als Katalysator verwendeten Verbindungen teuer, so daß insgesamt dieses Verfahren bei technischer Anwendung aufwendig ist.

Die EP-A-0 553 655 betrifft Polyacrylsäureester mit Ethersulfonatgruppen, erhältlich durch Umesterung von Polyacrylsäurealkylestern mit Ethersulfonaten der allgemeinen Formel 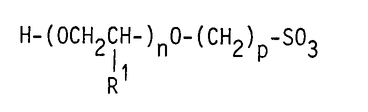 und gegebenenfalls Ethern der allgemeinen Formel 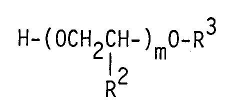 wobei
- R¹ und R²: jeweils ein Wasserstoff-, Methyl- oder Ethylrest ist,
- R³: ein Alkyl- oder Alkenylrest mit bis zu 30 Kohlenstoffatomen oder ein Alkylphenylrest, dessen Alkylgruppe bis zu 30 Kohlenstoffatome aufweist, ist,
- n und m: im durchschnittlichen Molekül jeweils einen Wert von 1 bis 200 haben und
- p: 2, 3 oder 4 ist.

Die vorliegende Erfindung befaßt sich mit dem technischen Problem der Herstellung von Blockcopolymeren, deren Segmente aus Methacrylsäureestern und Methacrylsäure bzw. deren Salzen gebildet werden. Die gewünschten Blockcopolymeren sollen in möglichst einfacher Weise zugänglich sein, um eine industrielle Fertigung dieser Verbindungen zu ermöglichen.

Aus Chemical Abstracts 98 (No. 8, 54652f) ist es zwar bekannt, Polymethacrylsäureester mit einem großen Überschuß an Diethylaminoethanol bei Temperaturen > 150°C in Gegenwart von Titanaten als Katalysatoren umzusetzen. Hierbei werden Polymere erhalten, bei denen ein Teil der Estergruppen mit Diethylaminoethanol umgeestert wird. Bei dieser Temperatur werden aber verhältnismäßig uneinheitliche Produkte erhalten, wobei thermische Zersetzungsprodukte nicht vermieden werden können.

Es wurde jedoch überraschenderweise gefunden, daß es bei Einhaltung bestimmter Strukturparameter für die umzusetzenden Polymethacrylsäureester und geeigneter Auswahl der Verfahrensbedingungen bei der Umesterung möglich ist, eine oder beide endständig gebundenen Estergruppen umzuestern, wobei die endständige tertiäre Estergruppe gegenüber der quartären Estergruppe entschieden bevorzugt wird. Dies ermöglicht die Herstellung von Polymethacrylsäureestern, deren Estergruppen in α- und gegebenenfalls ω-Stellung von den in der Kette befindlichen Estergruppen abweichen.

Gegenstand der Erfindung sind somit zunächst Blockcopolymere der allgemeinen Formel 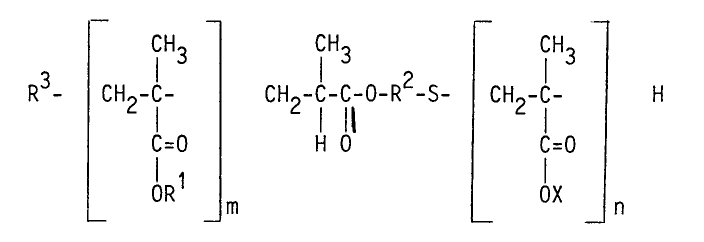 wobei die Reste
- R¹: gleich oder verschieden sind und Alkylreste mit 1 bis 22 Kohlenstoffatomen, Perfluoralkyl- oder Dialkylaminoalkylreste, ausgenommen den tert. Butylrest, bedeuten,
- R²: -(CH₂)ₚ-Reste sind, in denen p eine Zahl von 2 bis 6 bedeutet,
- R³: den Rest eines an sich bekannten Kettenreglers, welcher frei von aktiven Wasserstoffatomen ist, bedeutet,
- X: ein Kation ist,
- n und m: gleich oder verschieden sind und jeweils einen mittleren Zahlenwert von ≥ 3 aufweisen.

R¹ kann innerhalb des polymeren Moleküls gleich oder verschieden sein. Vorzugsweise ist R¹ ein Alkylrest mit 1 bis 8 Kohlenstoffatomen, insbesondere der Methyl-, Ethyl-, Butyl- oder 2-Ethylhexylrest. R¹ soll nicht der tert. Butylrest sein.

R¹ kann auch ein Perfluoralkylrest sein. Beispiele für Perfluoralkylreste sind die Reste -CH₂CF₃, -(CH₂)₂C₈F₁₇ oder -CH₂-CHF-CHF₂. Eine weitere Bedeutung für R¹ ist die eines Dialkylaminoalkylrestes. Beispiele geeigneter Dialkylaminoalkylreste sind Reste der Formel -R⁶-NR⁷R⁸, wobei R⁶ ein Alkylrest mit 1 bis 4 Kohlenstoffatomen und R⁷, R⁸ gleich oder verschieden sind und Alkylreste mit 1 bis 4 Kohlenstoffatomen bedeuten. Beispiele solcher Reste sind der -CH₂-CH₂-N(CH₃)₂ und der -CH₂-CH(CH₃)-N(C₂H₅)₂-Rest.

R² ist ein zweiwertiger aliphatischer Rest der Formel -(CH₂)ₚ-, wobei p eine Zahl von 2 bis 6 bedeutet. Besonders bevorzugt hat p einen Wert von 2.

R³ ist der Rest eines an sich bekannten Kettenreglers, wobei der Rest R³ frei von aktiven Wasserstoffatomen ist. Beispiele für Kettenregler sind Mercaptane, Chloroform und Isopropylbenzol. Bevorzugtes Beispiel eines solchen, vom Kettenregler herrührenden Restes R³ ist der Rest -SC₁₂H₂₅. Weitere Beispiele für Reste, die vom Kettenregler herrühren, sind der von tert.-Dodecylmercaptan abgeleitete Rest und der Octadecyl- und Tetradecylmercaptanrest.

X ist ein Kation. Vorzugsweise ist X ein Wasserstoff-, Alkali- oder ein Ammoniumrest, der gegebenenfalls alkylsubstituiert sein kann. Beispiele solcher substituierter Ammoniumreste sind die Reste NH(CH₃)₃-, N(C₂H₅)₄- und NH(CH₂-C₆H₅)(CH₃)₂-. Es können darüber hinaus die aus dem Stand der Technik für Polymethacrylsäure-Polymere bekannten Kationen ausgewählt werden, wie sie zum Beispiel in der EP-OS 0 518 225 (Seite 5) ausführlich beschrieben sind.

Die Indices n und m sind gleich oder verschieden und weisen jeweils einen mittleren Zahlenwert von ≥ 3 auf. Besonders bevorzugt sind für n und m jeweils Zahlenwerte von 4 bis 20.

Beispiele erfindungsgemäßer Blockcopolymerisate sind:

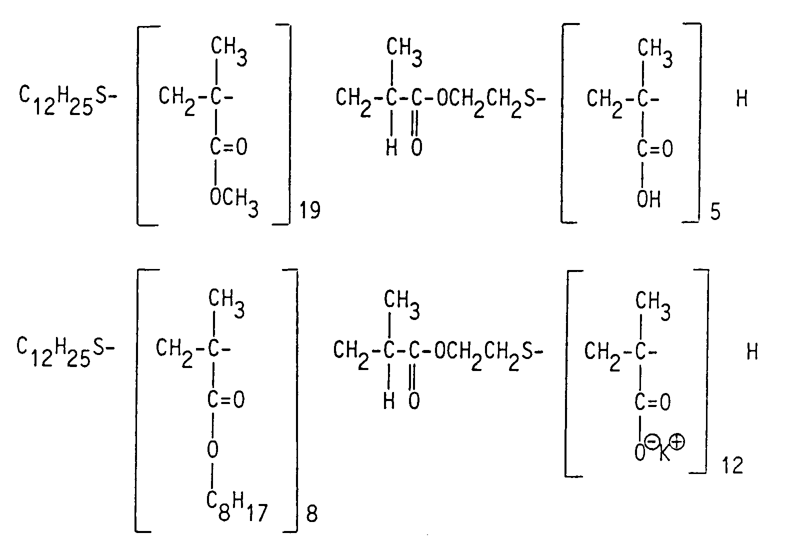

Ein weiterer Gegenstand der Erfindung sind die als Zwischenprodukte entstehenden tert.-Butylester der Polymethacrylat-Polymethacrylsäure-Blockcopolymeren, die der allgemeinen Formel 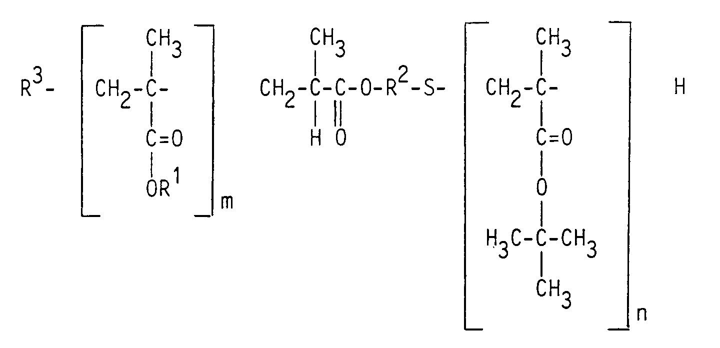 entsprechen. Dabei haben die Reste und Indices die bereits angegebenen Bedeutungen. Diese Zwischenprodukte sind kausal für die Struktur und Eigenschaften der Endprodukte.

Beispiele dieser Zwischenprodukte sind:

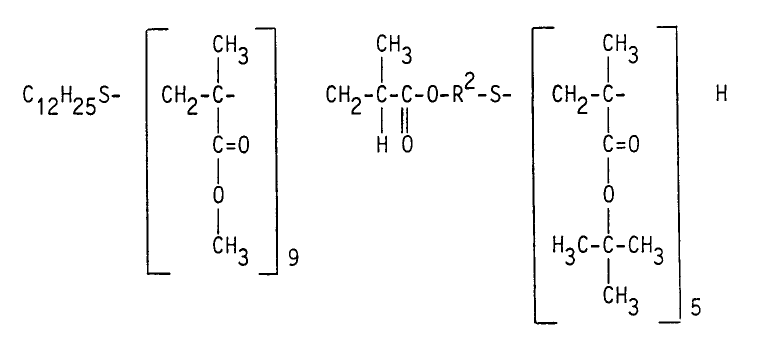

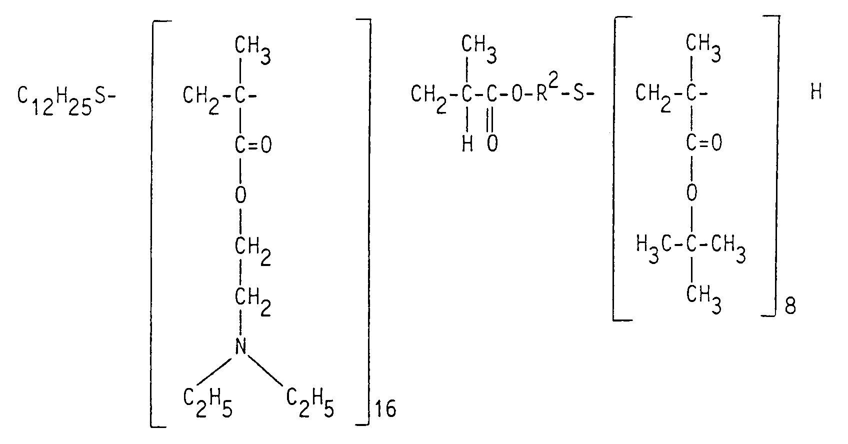

Ein weiterer Gegenstand der Erfindung besteht in der Herstellung der erfindungsgemäßen Blockcopolymeren. Dieses Verfahren ist dadurch gekennzeichnet, daß man
a) Polymerisate der allgemeinen Formel 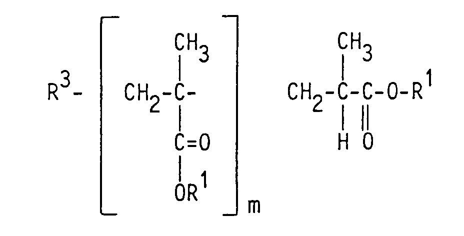 in der die Reste und Indices die bereits genannte Bedeutung haben, mit Polymerisaten der allgemeinen Formel 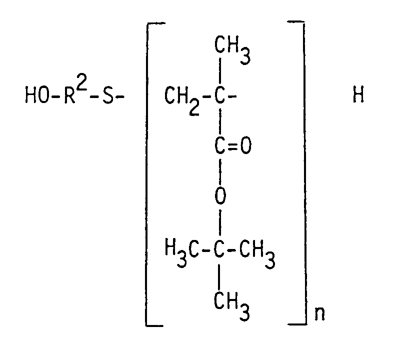 im Molverhältnis 1,1 : 1 bis 1,0 : 1 unter Zusatz von an sich bekannten Katalysatoren umestert und
b) das erhaltene Polymerisat der allgemeinen Formel 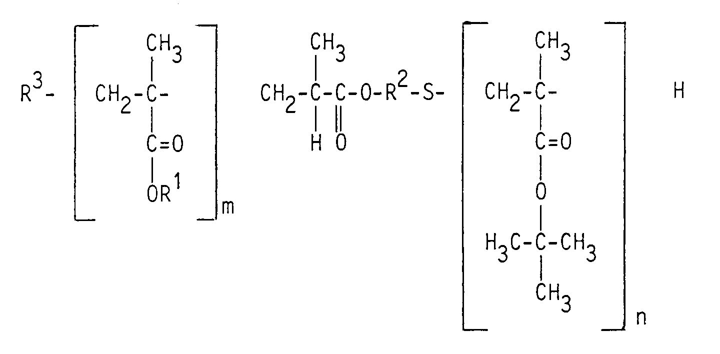 bei Temperaturen oberhalb 60°C in Gegenwart von Säure als Katalysator und gegebenenfalls eines Lösungsmittels oder oberhalb von 160°C ohne Katalysator unter Abspaltung von Isobutylen in das gewünschte Blockcopolymerisat der Formel 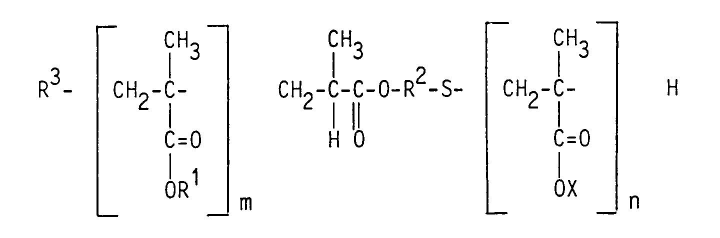 überführt und
c) gegebenenfalls in an sich bekannter Weise in das Alkali- oder Ammoniumsalz umwandelt.

Die Abspaltung des Isobutylens kann auch photochemisch in Gegenwart von sogenannten Crivellosalzen (Aryl-oniumsalze), z. B. Triphenylsulfonium-hexafluorophosphat, Diphenyliodonium-hexafluoroantimonat o. ä., durchgeführt werden (Lit.: J.V. Crivello, "UV Curing: Science and Techology", S.P. Pappas, ed., Technology Marketing Corp., Stamford, CT, 1978).

Bevorzugt ist bei der Umesterung im Verfahrensschritt a) ein Molverhältnis von 1,05 : 1.

In dem Verfahrensschritt a) erfolgt somit eine selektive Umesterung eines durch radikalische Polymerisation erhaltenen Methacrylsäureesters mit einem durch radikalische Polymerisation erhaltenen Methacrylsäure-tert.-butylester, zu dessen Herstellung als Starter ein hydroxyfunktionelles Alkylmercaptan verwendet worden war. Diese Hydroxygruppe reagiert mit der endständigen Estergruppe des erstgenannten Methacrylsäureesterpolymeren. Deshalb ist das Brückglied 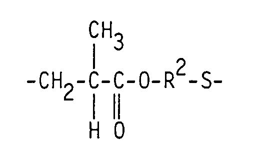 charakteristisch für die erfindungsgemäßen Blockcopolymeren. Es war besonders überraschend, daß die endständige, am tertiären Kohlenstoffatom befindliche Estergruppe erheblich schneller reagiert als die übrigen Estergruppen, insbesondere aber auch schneller als die am anderen Kettenende befindliche Estergruppe.

Für die Umesterung wird vorzugsweise ein an sich bekannter nichtbasischer Umesterungskatalysator verwendet. Beispiele hierfür sind Alkyltitanate, wie i-Propyl-, n-Butyl- oder i-Butyltitanat, ferner Stannate, wie Dialkylzinnacetathalogenid oder Zinndialkylester, insbesondere Dibutylzinndilaurat. Die Katalysatoren werden in Mengen von 0,5 bis 2 Gew.-%, bezogen auf Polymethacrylsäureester, eingesetzt.

In dem zweiten Verfahrensschritt b) wird
b1) bei Temperaturen oberhalb 60°C in Gegenwart von Säure als Katalysator, insbesondere von p-Toluolsulfonsäuremonohydrat, und gegebenenfalls in Anwesenheit eines Lösungsmittels, wie zum Beispiel Dioxan oder Lösungsmittelgemischen, wie zum Beispiel Toluol/Methanol oder Toluol/Dioxan, oder
b2) bei Temperaturen oberhalb von 160°C ohne Katalysator unter Abspaltung von Isobutylen das gewünschte Blockcopolymerisat erhalten, welches dann in das geforderte Alkali- oder Ammoniumsalz überführt werden kann.

Besonders bevorzugt verläuft die durch Säure katalysierte Abspaltung des Isobutylens bei Temperaturen von 80 bis 100°C in Gegenwart eines Katalysators. Bei der thermischen Abspaltung bei höheren Temperaturen kommt es zur Ausbildung von anhydridischen Strukturen, welche wieder in bekannter Weise in die freie Säure überführt werden können.

Ein weiterer Gegenstand der Erfindung besteht in deren Verwendung als Polymertenside, insbesondere als Dispergier- und Emulgiermittel, sowie als Antistatika.

Bevorzugte Anwendungsgebiete der erfindungsgemäßen Polymerisate sind ihre Verwendung
als Emulgatoren in der wäßrigen und inversen Emulsionspolymerisation,
als Dispergiermittel oder Suspensionsstabilisatoren für Pigmente und Füllstoffe, z.B. von Metalloxiden in keramischen Werkstoffen, von Pigmenten in Tintenstrahlfarben, von Füllstoffen in thermo- und duroplastischen Kunststoffen,
zur Hydrophilierung, zur antistatischen Ausrüstung,
als Polymerdispergator zur Legierung von Kunststoffen.

Das erfindungsgemäße Verfahren und die Eigenschaften der erfindungsgemäßen Blockcopolymeren werden in den folgenden Beispielen noch näher erläutert.

### Beispiel 1A

### Herstellung eines monohydroxyfunktionellen Poly-t-butylmethacrylates durch geregelte radikalische Polymerisation (nicht erfindungsgemäß)

Eine Lösung von 1,47 g Azodiisobuttersäurenitril und 78,1 g (ca. 1 Mol) 2-Mercaptoethanol in 150 g Xylol und 1136,8 g (ca. 8 Mol) tert.-Butylmethacrylat (TBMA) werden innerhalb von 4 h in einen mit 150 g Xylol gefüllten Reaktor gegeben; das vorgelegte Lösungsmittel hat dabei eine Temperatur von 120°C und befindet sich unter einer Stickstoffatmosphäre. Nach Beendigung der Reaktion werden zunächst 400 ppm Hydrochinonmonomethylether zugegeben und die Lösung auf 40°C abgekühlt, dann werden Lösungsmittel und das Restmonomere bei 120°C/133 Pa (1 Torr) abdestilliert; es verbleibt eine farblose, viskose Flüssigkeit.

Aus der gelpermeationschromatographischen Untersuchung ergibt sich für das erhaltene Polymerisat ein numerisches Molekulargewicht Mₙ (GPC) von 1300 und für das Gewichtsmittel des Molekulargewichtes M_{w} (GPC) 2170, der Uneinheitlichkeitsfaktor beträgt somit 1,67; aus dem Vergleich des aus der Hydroxylzahlbestimmung erhaltenen Molekulargewichtes (Mₙ/OH-Zahl) und dem dampfdruckosmometrisch ermittelten Molekulargewicht (Mₙ/Osmometrie) ergibt sich eine Hydroxyfunktionalität von 1,04. Der Restmonomerengehalt beträgt < 0,1 %.

### Beispiele 2A bis 8A

### Herstellung von monohydroxyfunktionellen Poly-t-butylmethacrylaten verschiedenen Molekulargewichtes durch geregelte radikalische Polymerisation (nicht erfindungsgemäß)

Es wird verfahren wie in Beispiel 1A mit der Ausnahme, daß die molaren Verhältnisse von tert.-Butylmethacrylat zu 2-Mercaptoethanol, wie in Tabelle 1 angegeben, verändert werden.

**Tabelle 1**

| Beispiel Nr. | Molverh. TBMA/Regler | Mₙ/OH-Zahl | Mₙ/Osmometrie | Mₙ/GPC (PMMA-Stand.) | Uneinheitlichkeit U = M_{w}/Mₙ |
|---|---|---|---|---|---|
| 1A | 8/1 | 1150 | 1200 | 1300 | 1,67 |
| 2A | 7/1 | 950 | 1000 | 1250 | 1,48 |
| 3A | 4/1 | 620 | 700 | 700 | 1,52 |
| 4A | 10/1 | 1350 | 1300 | 1600 | 1,59 |
| 5A | 15/1 | 2050 | 2100 | 2200 | 1,79 |
| 6A | 20/1 | 2600 | 2850 | 2950 | 1,84 |
| 7A | 40/1 | 4900 | 5150 | 5200 | 1,74 |
| 8A | 80/1 | 9900 | - | 11250 | 1,98 |
| TBMA: tert.-Butylmethacrylat Regler: 2-Mercaptoethanol Mₙ: Zahlenmittel des Molekulargewichtes M_{w}: Gewichtsmittel des Molekulargewichtes | | | | | |

### Beispiel 1B

### Herstellung eines Polymethylmethacrylates durch geregelte radikalische Polymerisation (nicht erfindungsgemäß)

Eine Lösung von 1,4 g Azodiisobuttersäurenitril, 94 g (ca. 0,47 Mol) Dodecylmercaptan, 76 g Xylol und 376 g (ca. 3,76 Mol) Methylmethacrylat wird innerhalb von 3 bis 4 h in einen mit 40 g Xylol gefüllten Reaktor gegeben; das vorgelegte Lösungsmittel hat dabei eine Temperatur von 100°C und befindet sich unter einer Stickstoffatmosphäre. Anschließend werden nochmals 0,93 g Azodiisobuttersäurenitril, gelöst in 9,3 g Methylethylketon, innerhalb von 1 h in gleichen Teilen nachgegeben. Schließlich wird das Reaktionsgemisch noch für 1 h bei der gleichbleibenden Temperatur von 100°C weiter erwärmt. Nach Beendigung der Reaktion werden das Lösungsmittel und das Restmonomere bei 130°C/133 Pa (1 Torr) abdestilliert; es verbleibt eine farblose, viskose Flüssigkeit.

Aus der gelpermeationschromatographischen Untersuchung ergibt sich für das erhaltene Polymerisat ein numerisches Molekulargewicht Mₙ (GPC) von 1100 und für das Gewichtsmittel des Molekulargewichtes M_{w} (GPC) ein Wert von 1710; der Uneinheitlichkeitskoeffizient beträgt demnach 1,55. Der Restmonomergehalt ist kleiner 0,1 %.

### Beispiele 2B bis 8B

### Herstellung von Polymethacrylaten mit unterschiedlichen Alkylgruppen und verschiedenen Molekulargewichten durch geregelte radikalische Polymerisation (nicht erfindungsgemäß)

Es wird verfahren wie in Beispiel 1B mit der Ausnahme, daß unterschiedliche Methacrylate als Monomere eingesetzt und das Methacrylat/Regler-Verhältnis, wie in Tabelle 2 angegeben, verändert wird. Ebenfalls werden in Tabelle 2 Zahlenmittel und Gewichtsmittel der Molekulargewichte und der Uneinheitlichkeitskoeffizient aus der gelpermeationschromatographischen Untersuchung sowie das dampfdruckosmometrisch ermittelte Molekulargewicht angegeben. Der gefundene Restmonomergehalt beträgt in allen Fällen < 0,1 %.

**Tabelle 2**

| Beispiel Nr. | Methacrylat | Molverh. Methacrylat/Regler | Mₙ/Osmometrie | Mₙ/GPC (PMMA-Stand.) | Uneinheitlichkeit U = M_{w}/ Mₙ |
|---|---|---|---|---|---|
| 1B | MMA | 8/1 | 1150 | 1100 | 1,55 |
| 2B | MMA | 28/1 | 2600 | 2650 | 1,86 |
| 3B | MMA | 46/1 | 5050 | 5200 | 1,78 |
| 4B | MMA | 95/1 | - | 9900 | 1,94 |
| 5B | BMA | 5,6/1 | 950 | 1000 | 1,39 |
| 6B | BMA | 19,7/1 | 3100 | 3650 | 1,78 |
| 7B | EHMA | 4/1 | 950 | 1350 | 1,34 |
| 8B | TFEMA | 7/1 | 1050 | 1150 | 1,49 |
| MMA: Methylmethacrylat BMA: n-Butylmethacrylat EHMA: 2-Ethylhexylmethacrylat TFEMA: 2,2,2-Trifluorethylmethacrylat Regler: n-Dodecylmercaptan | | | | | |

### Beispiel 1C

### Herstellung eines Polymethylmethacrylat-b-Poly-t-butylmethacrylat-Copolymeren (erfindungsgemäß)

447 g (ca. 0,40 Mol) des in Beispiel 1B beschriebenen geregelten Polymethylmethacrylats und 490,5 g (ca. 0,42 Mol) des monohydroxyfunktionellen Poly-t-butylmethacrylats aus Beispiel 1A, gelöst in 438 g Toluol, werden zusammen mit 2 ml Triethylamin unter Reinstickstoff auf etwa 110°C erwärmt und anschließend bei 5 Torr das Lösungsmittel unter gleichzeitiger Abtrennung möglicherweise vorhandenen Wassers abdestilliert. Nach Zugabe von 470 g Toluol erfolgt bei 115°C die Zugabe von 4,68 g (0,5 Gew.-%) Isopropyltitanat. Das bei der einsetzenden Reaktion entstehende Methanol wird durch Fraktionierung vom Toluol getrennt und entfernt. Nach 4 h werden nochmals 2,34 g (0,25 Gew.-%) Isopropyltitanat zugesetzt, Methanol entfernt und die Reaktion nach weiteren 3 h beendet.

Die Hydroxylzahl des erhaltenen Produktes beträgt 1,6, was einem Umsatz von 96 % (bezogen auf die im Unterschuß eingesetzte Komponente) entspricht. Aus der gelpermeationschromatographischen Untersuchung ergibt sich für das numerische Molekulargewicht des Blockcopolymeren Mₙ (GPC) ein Wert von 2350, der Uneinheitlichkeitskoeffizient beträgt 1,48. Das dampfdruckosmometrisch ermittelte Molekulargewicht beträgt 2050.

### Beispiele 2C bis 15C

### Herstellung von Polymethylmethacrylat-b-Poly-t-butylmethacrylat-Copolymeren mit unterschiedlichen Alkylgruppen und verschiedenen Molekulargewichten (erfindungsgemäß)

Es wird prinzipiell verfahren wie in Beispiel 1C mit der Ausnahme, daß, wie in Tabelle 3 angegeben, Methacrylatsegmente unterschiedlicher chemischer Struktur und verschiedenen Molekulargewichten mit monohydroxyfunktionellen Poly-t-butylmethacrylaten verschiedener Molekulargewichte zur Reaktion gebracht werden. Zudem wird in den Beispielen 9C bis 13C anstelle von Toluol 1,3-Diisopropylbenzol als Lösungsmittel verwendet; die Reaktion erfolgt bei 115°C/5320 Pa (40 Torr).

Die Gesamtmenge des Katalysators wird in den Beispielen 9C bis 13C in vier gleichen Portionen zugegeben. Die Reaktionszeit beträgt insgesamt 16 Stunden.

**Tabelle 3**

| Beispiel Nr. | PTBMA aus Tab. 1 Beispiel Nr. | Polymethacrylat aus Tab. 2 Beispiel Nr. | Blockcopolym. Typ* | Umsatz/OH-Zahl** | Mₙ/Osmometrie | Mₙ/GPC (PMMA-Stand.) | Uneinheitlichkeit U = M_{w}/Mₙ |
|---|---|---|---|---|---|---|---|
| 1C | 1A | 1B | MV 1111 | 0,96 | 2050 | 2350 | 1,42 |
| 2C | 3A | 2B | MV 2606 | 0,91 | 3200 | 3800 | 1,63 |
| 3C | 2A | 1B | MV 1110 | 0,94 | 2000 | 2250 | 1,42 |
| 4C | 3A | 1B | MV 1106 | 0,87 | 1500 | 1800 | 1,38 |
| 5C | 6A | 1B | MV 1126 | 0,85 | 3350 | 3700 | 1,66 |
| 6C | 7A | 1B | MV 1150 | 0,79 | 5600 | 6200 | 1,89 |
| 7C | 8A | 1B | MV 1199 | 0,75 | - | 12500 | 1,97 |
| 8C | 1A | 2B | MV 2611 | 0,81 | 3100 | 4400 | 1,56 |
| 9C | 3A | 5B | BV 1006 | 0,97 | 1550 | 1900 | 1,31 |
| 10C | 1A | 5B | BV 1011 | 0,92 | 1700 | 2200 | 1,44 |
| 11C | 1A | 6B | BV 2611 | 0,88 | 3800 | 4200 | 1,64 |
| 12C | 3A | 7B | OV 1006 | 0,93 | 1500 | 1850 | 1,42 |
| 13C | 1A | 7B | OV 1011 | 0,97 | 2100 | 2250 | 1,47 |
| 14C | 3A | 8B | FV 1106 | 0,95 | 1500 | 1700 | 1,44 |
| 15C | 1A | 8B | FV 1111 | 0,91 | 2000 | 2300 | 1,52 |
| M: Methylmethacrylat B: n-Butylmethacrylat O: 2-Ethylhexylmethacrylat F: 2,2,2-Trifluorethylmethacrylat V: Vorprodukt = tert.-Butylmethacrylat | | | | | | | |

| | | | | | | | |
|---|---|---|---|---|---|---|---|
| * Die ersten beiden Zahlen der Typbezeichnung in der vierten Spalte multipliziert mit 100 entsprechen etwa dem Molekulargewicht des Methacrylatblockes, die letzten beiden Zahlen multipliziert mit 100 entsprechen etwa dem Molekulargewicht des tert.-Butylmethacrylatblockes. Im Falle des Produktes MV 1111 bedeutet dies, daß die beiden Segmente ein Molekulargewicht von jeweils etwa 1100 aufweisen. | | | | | | | |
| ** Mol umgeestert, bezogen auf die im Unterschuß eingesetzte Komponente | | | | | | | |

### Beispiel 1D

### Herstellung eines Polymethylmethacrylat-b-Polymethacrylsäure-Copolymeren (erfindungsgemäß)

173 g des in Beispiel 1C beschriebenen Blockcopolymeren werden mit 115 g Dioxan und 4,3 g (2,5 Gew.-%) p-Toluolsulfonsäuremonohydrat auf 95 bis 100°C erwärmt und über einen Zeitraum von 5 h bei der gleichbleibenden Temperatur belassen. Die beginnende Abspaltung des Isobutens läßt sich an einer deutlichen Gasentwicklung erkennen. Die Säurezahl des erhaltenen Produktes in der Lösung beträgt 118, was einem Umsatz von etwa 90 % entspricht.

NMR-spektroskopisch (¹H-, ¹³C-NMR: Vergleich der Signalintensitäten der charakteristischen tert.-Butylgruppe) ergibt sich ein Umsatz von 97 %.

### Beispiele 2D bis 15D

### Herstellung von Polymethacrylat-b-Polymethacrylsäure-Copolymeren (erfindungsgemäß)

Es wird verfahren wie in Beispiel 1D mit der Ausnahme, daß Feststoffkonzentrationen bei zu hohen Viskositäten im Verlauf der Isobutenabspaltung durch weitere Verdünnung mit Dioxan so angepaßt werden, daß eine homogene Reaktionsführung über die gesamte Reaktionszeit gewährleistet bleibt.

Bei den Beispielen 12D und 13D ist auf die Verwendung von Lösungsmittel verzichtet worden.

Bei den Beispielen 8D und 11D ist ein Lösungsmittelgemisch, bestehend aus einem Teil Dioxan und einem Teil Toluol, verwendet worden.

Die aus der Säurezahl und die über ¹³C-NMR-Spektroskopie ermittelten Umsätze sind in Tabelle 4 angegeben.

**Tabelle 4**

| Beispiel Nr. | Blockcopolymer aus Tab. 3 Beispiel Nr. | Blockcopolymer-Typ | Umsatz in % (Säurezahl)¹ | Umsatz in % (¹³C-NMR) |
|---|---|---|---|---|
| 1D | 1C | MA 1111 | 90 | 97 |
| 2D | 2C | MA 2606 | 87 | 98 |
| 3D | 3C | MA 1110 | 96 | 97 |
| 4D | 4C | MA 1106 | 92 | 98 |
| 5D | 5C | MA 1126 | 87 | 97 |
| 6D | 6C | MA 1150 | 90 | 95 |
| 7D | 7C | MA 1199 | 92 | 96 |
| 8D | 8C | MA 2611 | 100 | 98 |
| 9D | 9C | BA 1006 | 89 | 97 |
| 10D | 10C | BA 1011 | 90 | 98 |
| 11D | 11C | BA 2611 | 94 | 96 |
| 12D | 12C | OA 1006 | 95 | 96 |
| 13D | 13C | OA 1011 | 97 | 95 |
| 14D | 14C | FA 1106 | 95 | 99 |
| 15D | 15C | FA 1111 | 94 | 97 |
| M: Methylmethacrylat B: n-Butylmethacrylat O: 2-Ethylhexylmethacrylat F: 2,2,2-Trifluorethylmethacrylat A: Acid (= Methacrylsäure) | | | | |

| | | | | |
|---|---|---|---|---|
| ¹ unter Berücksichtigung der eingewogenen Menge an p-Toluolsulfonsäuremonohydrat | | | | |

### Beispiel E

### Herstellung eines Polymethylmethacrylat-b-Polynatriummethacrylat-Copolymeren durch Neutralisation mit wäßriger Natronlauge (erfindungsgemäß)

2,0 g des in Beispiel 1D dargestellten Polymethylmethacrylat-b-Polymethacrylsäure-Copolymeren werden in 31 ml Wasser suspendiert, mit einigen Tropfen Phenolphthaleinlösung versetzt und mit insgesamt 7,7 ml 1n NaOH bis zum Umschlagpunkt titriert. Man erhält so eine wasserklare Lösung (Feststoffgehalt 5 %), deren pH-Wert mit 8,7 bestimmt wird.

## Patentansprüche

1. Blockcopolymere der allgemeinen Formel 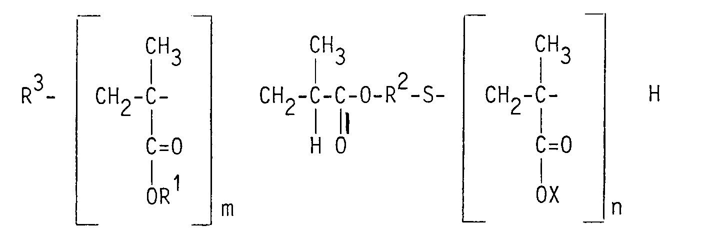 wobei die Reste
R¹ gleich oder verschieden sind und Alkylreste mit 1 bis 22 Kohlenstoffatomen, Perfluoralkyl- oder Dialkylaminoalkylreste, ausgenommen den tert. Butylrest, bedeuten,
R² -(CH₂)ₚ-Reste sind, in denen p eine Zahl von 2 bis 6 bedeutet,
R³ den Rest eines an sich bekannten Kettenreglers, welcher frei von aktiven Wasserstoffatomen ist, bedeutet,
X ein Kation ist und
n und m gleich oder verschieden sind und jeweils einen mittleren Zahlenwert von ≥ 3 aufweisen.

2. Blockcopolymere nach Anspruch 1, dadurch gekennzeichnet, daß die Reste und Indices einzeln oder in Kombination folgende Bedeutung haben:
R¹ Alkylrest, ausgenommen der tert. Butylrest, mit 1 bis 8 Kohlenstoffatomen,
R² der -(CH₂)₂-Rest,
R³ der -S-C₁₂H₂₅-Rest,
X ein Wasserstoff-, Alkali- oder gegebenenfalls alkylsubstituiertes Ammoniumion ist, und
n und m jeweils einen mittleren Zahlenwert von 4 bis 20 aufweisen.

3. Blockcopolymere der allgemeinen Formel 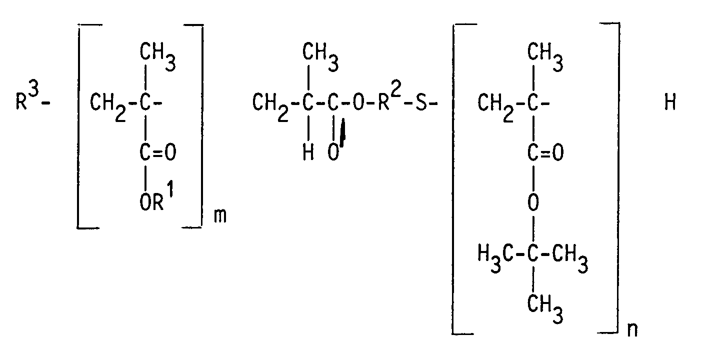 wobei die Reste und Indices die bereits angegebene Bedeutung haben, als Zwischenprodukte zur Herstellung der Blockcopolymeren gemäß Anspruch 1.

4. Verfahren zur Herstellung der Blockcopolymerisate nach Anspruch 1 oder 2, dadurch gekennzeichnet, daß man
a) Polymerisate der allgemeinen Formel 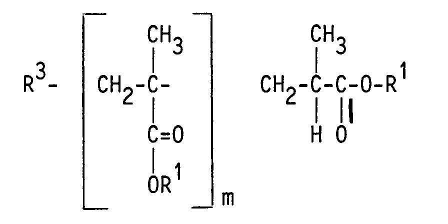 in der die Reste und Indices die bereits genannte Bedeutung haben, mit Polymerisaten der allgemeinen Formel 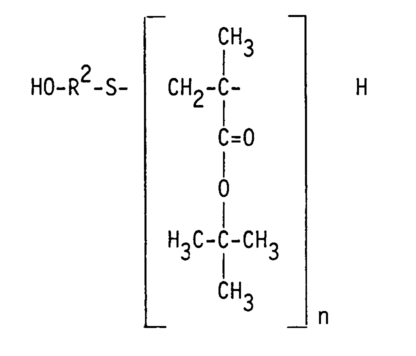 im Molverhältnis 1,1 : 1 bis 1,0 : 1 unter Zusatz von an sich bekannten Katalysatoren umestert und
b) das erhaltene Polymerisat der allgemeinen Formel 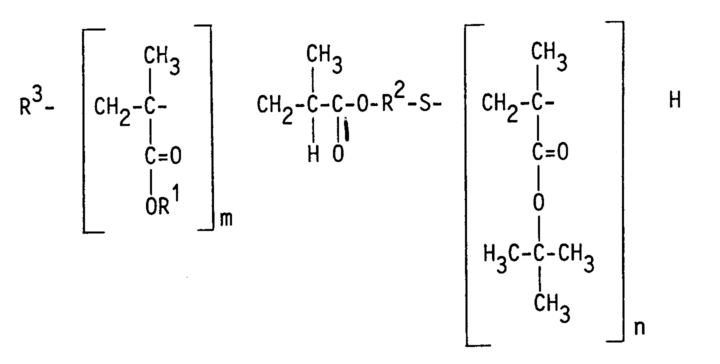 bei Temperaturen oberhalb 60°C in Gegenwart von Säure als Katalysator und gegebenenfalls eines Lösungsmittels oder oberhalb von 160°C ohne Katalysator unter Abspaltung von Isobutylen in das gewünschte Blockcopolymerisat der Formel 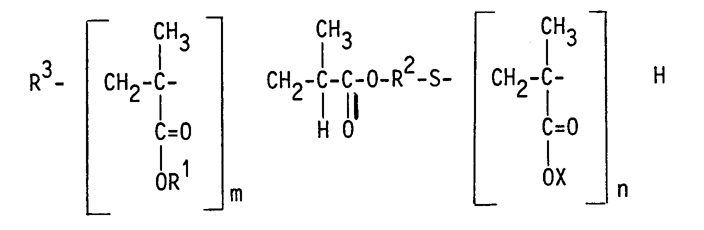 überführt und
c) gegebenenfalls in an sich bekannter Weise in das Alkali- oder Ammoniumsalz umwandelt.

5. Verwendung der Blockcopolymeren nach Anspruch 1 als Dispergier- und Emulgiermittel.

## Claims

1. Block copolymers of the general formula 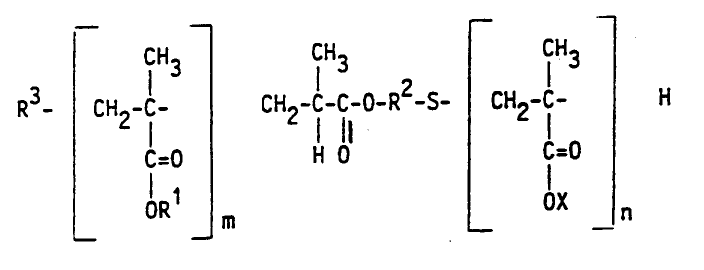 where the radicals
R¹ are identical or different and are alkyl radicals having from 1 to 22 carbon atoms, perfluoroalkyl or dialkylaminoalkyl radicals, with the exception of the tert-butyl radical,
R² are -(CH₂)ₚ- radicals in which p is from 2 to 6,
R³ is the radical of a chain regulator known per se which is free of active hydrogen atoms,
X is a cation and
n and m are identical or different and each have a mean numerical value of ≥ 3.

2. Block copolymers according to Claim 1, characterized in that the radicals and indices, individually or in combination, have the following meanings:
R¹ is an alkyl radical, with the exception of the tert-butyl radical, having from 1 to 8 carbon atoms,
R² is the -(CH₂)₂- radical,
R³ is the -S-C₁₂H₂₅ radical,
X is a hydrogen, alkali metal or unsubstituted or alkyl-substituted ammonium ion, and
n and m each have a mean numerical value of from 4 to 20.

3. Block copolymers of the general formula 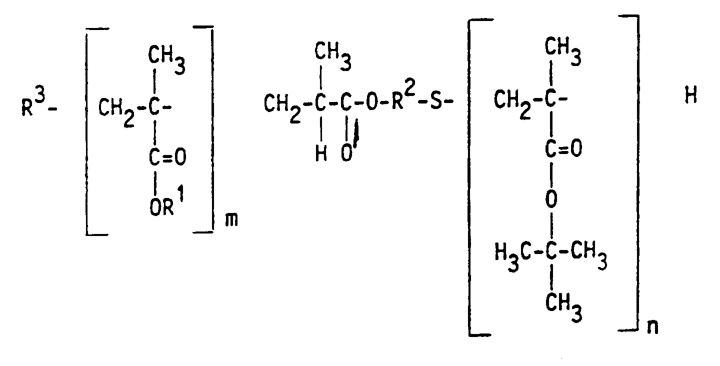 where the radicals and indices are as defined above, as intermediates for preparing the block copolymers according to Claim 1.

4. Process for preparing the block copolymers according to Claim 1 or 2, characterized in that
a) polymers of the general formula 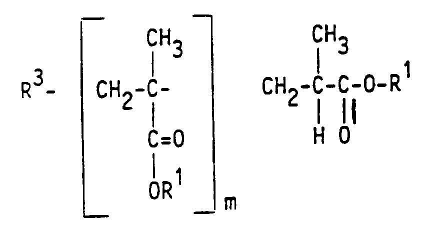 where the radicals and indices are as defined above, are transesterified with polymers of the general formula 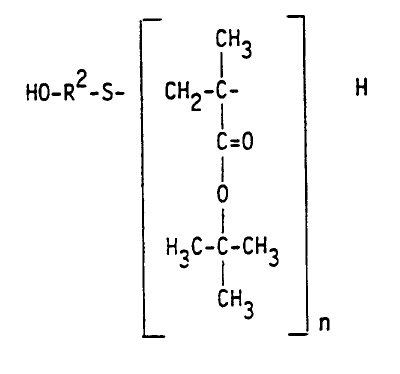 in a molar ratio of from 1.1:1 to 1.0:1 with addition of catalysts known per se and
b) the resulting polymer of the general formula 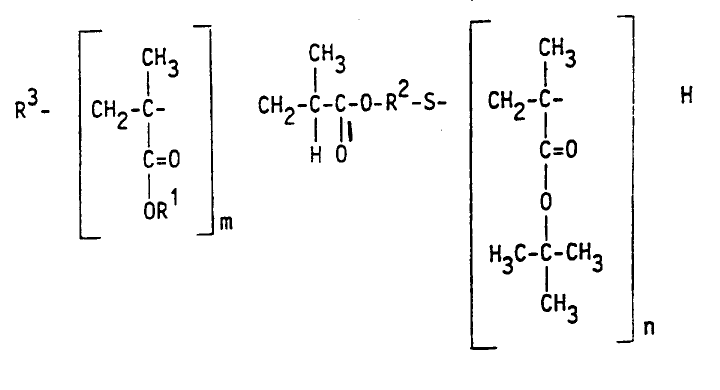 is converted at temperatures above 60°C in the presence of acid as catalyst and in the presence of absence of a solvent or above 160°C in the absence of catalyst with elimination of isobutylene into the desired block copolymer of the formula 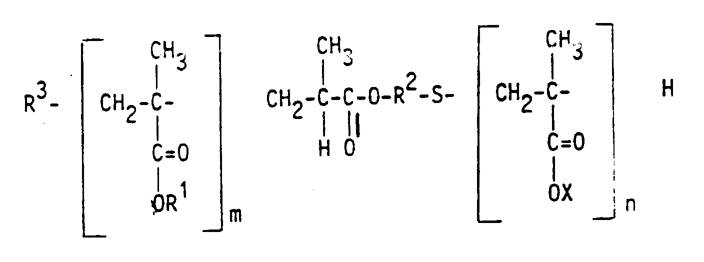 and
c) if desired, converted into the alkali metal or ammonium salt in a manner known per se.

5. Use of the block copolymers according to Claim 1 as dispersants and emulsifiers.

## Revendications

1. Copolymères blocs de formule générale : 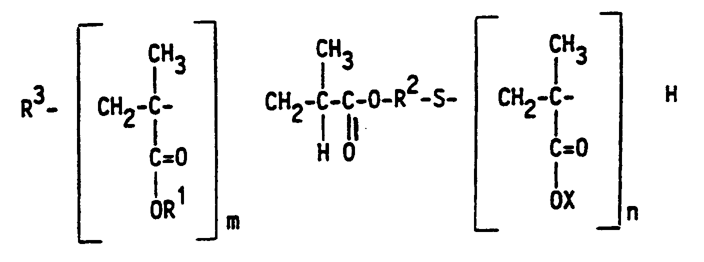 dans laquelle :
les radicaux R¹ sont identiques ou différents et représentent des radicaux alcoyle avec 1 à 22 atomes de carbone, des radicaux perfluoroalcoyle ou dialcoylaminoalcoyle, à l'exception du radical tert-butyle;
les radicaux R² sont des radicaux -(CH₂)ₚ-, dans lesquels p représente un nombre de 2 à 6;
le radical R³ représente le radical d'un régulateur de chaîne connu en soi, qui est dépourvu d'atomes d'hydrogène actifs;
le radical X est un cation, et
n et m sont identiques ou différents et possèdent chacun une valeur numérique moyenne ≥ 3.

2. Copolymères blocs suivant la revendication 1, caractérisés en ce que les radicaux et indices, individuellement ou en combinaison, ont les significations suivantes :
R¹ est un radical alcoyle, à l'exception du radical tert-butyle, avec 1 à 8 atomes de carbone;
R² est le radical -(CH₂)₂-;
R³ est le radical -S-C₁₂H₂₅-;
X est un hydrogène, un ion ammonium substitué par un alcalin ou éventuellement par un alcoyle, et
n et m ont chacun une valeur numérique moyenne de 4 à 20.

3. Copolymères blocs de formule générale : 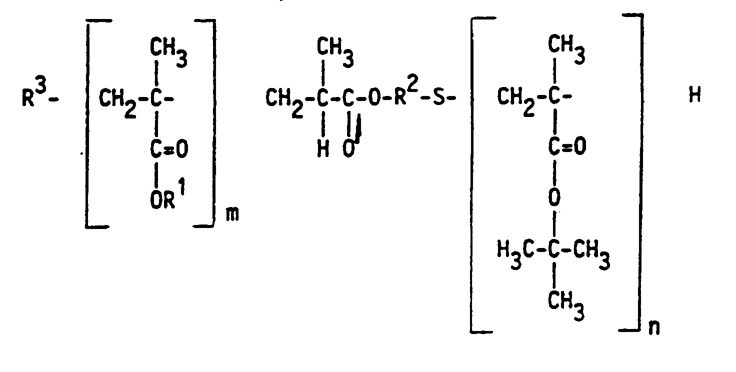 dans laquelle les radicaux et indices ont la signification déjà donnée, en tant que produit intermédiaire pour la fabrication des copolymères blocs suivant la revendication 1.

4. Procédé de fabrication des copolymères blocs suivant la revendication 1 ou 2, caractérisé en ce que :
a) l'on transestérifie des polymères de formule générale : 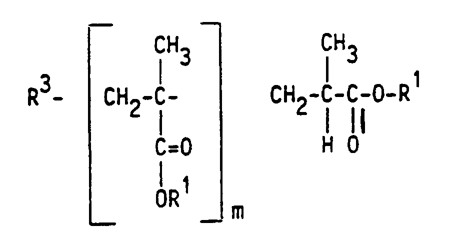 dans laquelle les radicaux et indices ont la signification déjà donnée,
avec des polymères de formule générale : 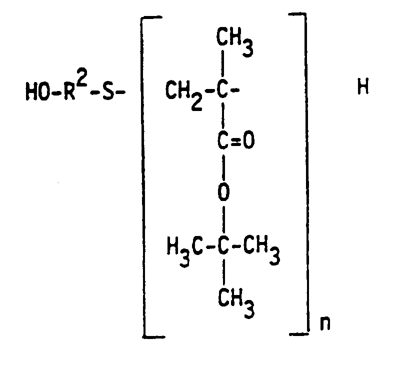 dans un rapport molaire de 1,1:1 à 1,0:1, avec addition de catalyseurs connus en soi,
et en ce que
b) le polymère obtenu, de formule générale : 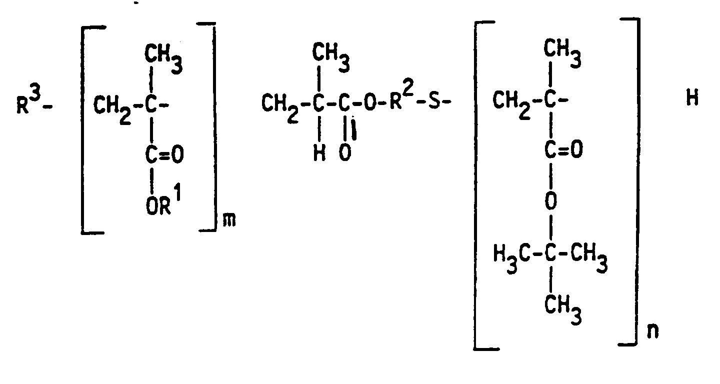 est transformé par séparation d'isobutyles, à des températures supérieures à 60°C, en présence d'acide en tant que catalyseur et éventuellement d'un solvant, ou au-dessus de 160°C sans catalyseur, en le copolymère bloc désiré de formule générale : 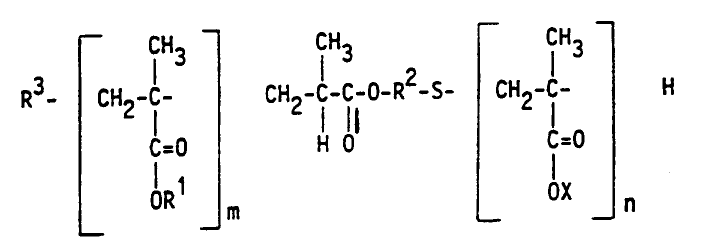 et en ce que
c) il est éventuellement transformé, d'une manière connue en soi, en son sel alcalin ou d'ammonium.

5. Utilisation des copolymères blocs suivant la revendication 1 comme agent dispersant et en tant qu'émulsionnant.
